# EUROPEAN PATENT APPLICATION

(11) **EP 3 048 434 A2**
(43) Date of publication of application: **27.07.2016**
(21) Application number: 16151689.3
(22) Date of filing: 18.01.2016
(51) Int. Cl.: G01L 9/00, G01L 19/14

(54) **PRESSURE SENSOR MODULE AND METHOD FOR MANUFACTURING THE SAME**

(30) Priority: 19.01.2015 JP 2015008033
(71) Applicant: TGK CO., Ltd., Tokyo 193-0942 (JP)
(72) Inventor: KANEKO, Yasuaki, Tokyo, 193-0942 (JP); OOTA, Masaki, Tokyo, 193-0942 (JP); TSUDA, Hitoshi, Tokyo, 193-0942 (JP)
(74) Representative: Schröer, Gernot H.

(57) **Abstract**

A base body (14), a first diaphragm (36A), a first elastic body (42A), and a first mounting member (44A) are included. The base body (14) has a first recess (22A) with a pressure sensor element (12), and a first receiving surface section (30A) extending outward from an opening edge of the first recess (22A). The first diaphragm (36A) is provided facing the first receiving surface section (30A) so as to close the first recess (22A) from an inlet side. The first elastic body (42A) is arranged on one surface side of the first diaphragm (36A) outside the opening edge of the first recess (22A). The first mounting member (44A) is mounted on the base body (14) with the first diaphragm (36A) and the first elastic body (42A) pressed toward the first receiving surface section (30A).

## Description

The present invention relates to a pressure sensor module for detecting a pressure of a medium to be measured.

### Background Art

In this sort of pressure sensor module (hereinafter referred to as a "sensor module"), known in the related art is a structure using a diaphragm in order to isolate and protect a pressure sensor element (hereinafter referred to as a "sensor element") from a medium to be measured. In this structure, normally, a pressure chamber which the sensor element is housed in, and an introducing chamber which the medium to be measured flows into, are separated by the diaphragm, and a pressure transmission medium such as silicone oil is sealed in the pressure chamber. A pressure to be transmitted from the medium to be measured in the introducing chamber to the diaphragm is transmitted to the sensor element through the pressure transmission medium in the pressure chamber, and the pressure of the medium to be measured can be detected by the sensor element.

In this sort of structure, it is necessary to fix a diaphragm to a base body such as a housing. As one example of this, Patent Literature 1 discloses a structure for fixing a metal diaphragm to a base body by laser welding.

### Citation List

### Patent Literature

Patent Literature 1: JP 2013-242157 A
Patent Literature 2: JP 11-23397 A
Patent Literature 3: JP 2003-194649 A

A structure in Patent Literature 1 requires welding in fixing a diaphragm to a base body. Therefore, the diaphragm may be distorted by an effect of welding heat. When the diaphragm is distorted, a way of transmitting a pressure from a medium to be measured to the diaphragm changes and a detection accuracy by a sensor element can be deteriorated.

The present invention has been made in view of the above, and an object thereof is to provide a pressure sensor module that can fix a diaphragm to a base body without using welding.

### Solution to Problem

A pressure sensor module according to an aspect of the present invention includes a base body that has a first recess with a pressure sensor element to be installed inside, and a first receiving surface section extending outward from an opening edge of the first recess, a first diaphragm that is provided facing the first receiving surface section so as to close the first recess from an inlet side and arranged separably from the base body, a first elastic body that is arranged on one side of the first diaphragm outside the opening edge of the first recess, and a first mounting member that is mounted on the base body with the first diaphragm and the first elastic body pressed toward the first receiving surface section.

A method for manufacturing a pressure sensor module according to another aspect of the present invention is a method for manufacturing the pressure sensor module according to the above-mentioned aspect, and includes preparing the base body with the pressure sensor element installed, arranging the first diaphragm facing the first receiving surface section so as to close the first recess from the inlet side with the first recess filled with a pressure transmission medium, arranging the first elastic body on one side of the first diaphragm, and mounting the first mounting member on the base body with the first elastic body and the first diaphragm pressed toward the first receiving surface section.

According to an embodiment of the present invention, a diaphragm can be fixed to a base body without using welding.
FIG. 1 is a perspective view of a sensor module according to a first embodiment.
FIG. 2 is an exploded perspective view of the sensor module according to the first embodiment.
FIG. 3 is a sectional side view of the sensor module according to the first embodiment.
FIG. 4 is a top view of the sensor module according to the first embodiment.
FIG. 5 is a sectional side view illustrating an exemplary usage state of the sensor module according to the first embodiment.
FIG. 6 is a sectional side view illustrating an exemplary method for manufacturing the sensor module according to the first embodiment.
FIG. 7(a) is a partially enlarged view of a first mounting member of FIG. 3, and FIG. 7(b) is a diagram viewed from a direction Fv1 of FIG. 7(a).
FIG. 8(a) is a top view of a base body according to the first embodiment, and FIG. 8(b) is a sectional view of an A-A line of FIG. 8(a).
FIG. 9 is a sectional side view of a sensor module according to a second embodiment.
FIG. 10 is an exploded perspective view of the sensor module according to the second embodiment.
FIG. 11 is a diagram viewed from a direction Fv2 of FIG. 9.
FIG. 12 is a sectional side view of a part of a sensor module according to a first modification.
FIG. 13 is a sectional side view of a method for manufacturing a sensor module according to a second modification.

Hereinafter, in descriptions of embodiments, identical components bear identical signs, and overlapping descriptions will be omitted. In drawings, for convenience of description, a part of components will be appropriately omitted.

### [First Embodiment]

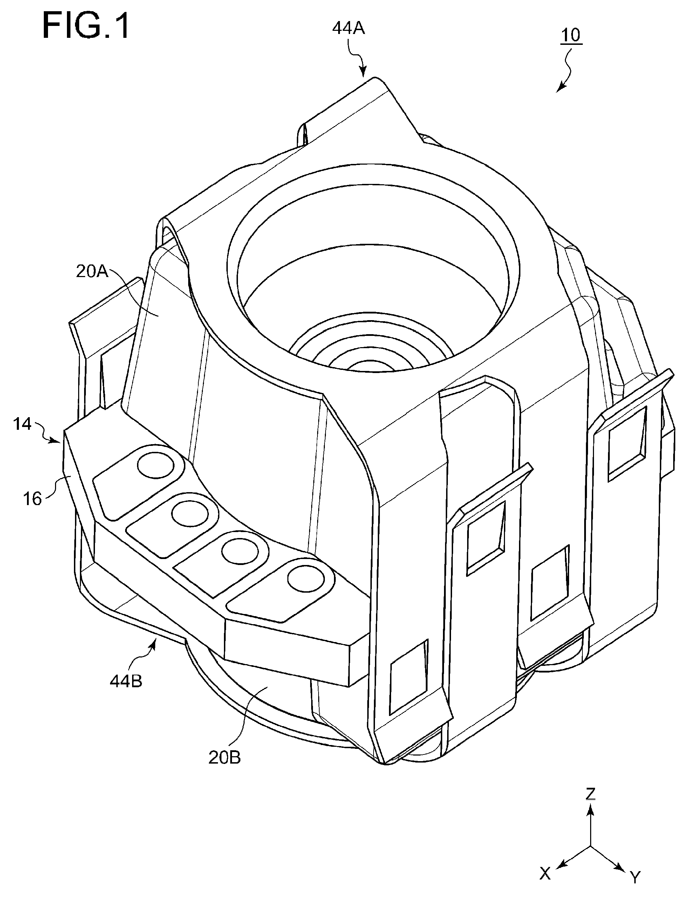

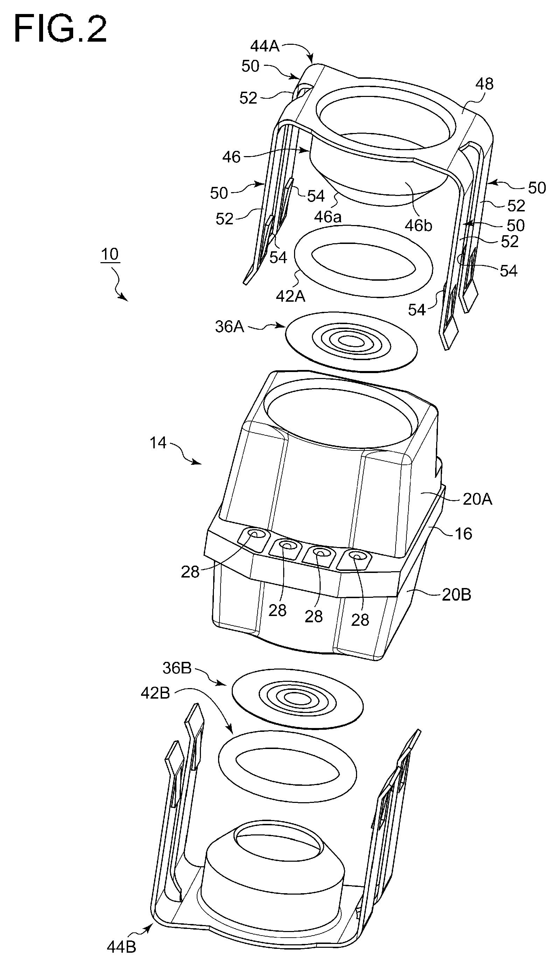

FIG. 1 is a perspective view of a sensor module 10 according to a first embodiment, and FIG. 2 is an exploded perspective view thereof. The sensor module 10 is used as a differential pressure sensor that detects a pressure difference between media to be measured flowing in two fluid passages of a vehicle air conditioner.

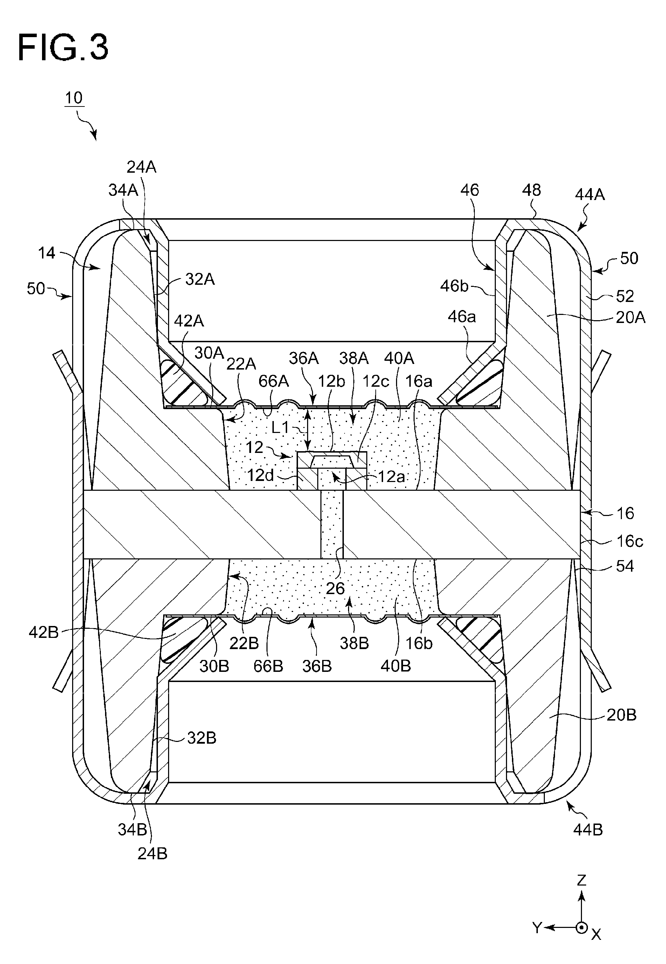

FIG. 3 is a sectional side view of the sensor module 10. The sensor module 10 includes a base body 14, on which a sensor element 12 is installed (see also FIG. 2). The base body 14 has a circuit board 16, a first mold resin 20A, and a second mold resin 20B. The circuit board 16 has the sensor element 12 to be mounted on a sensor mounting surface 16a, that is one surface side thereof. The first mold resin 20A coats the sensor mounting surface 16a. The second mold resin 20B coats a rear surface 16b of the circuit board 16, which is the opposite side of the sensor mounting surface 16a. The base body 14 has a first bottomed hole section 24A with step to be formed on the first mold resin 20A and a second bottomed hole section 24B with step to be formed on the second mold resin 20B. The first stepped bottomed hole section 24A includes a first recess 22A. The second stepped bottomed hole section 24B includes a second recess 22B.

In the sensor module 10, configurations on a surface side of the base body 14 (a side of the sensor mounting surface 16a), on which the first recess 22A is provided, and configurations on a side of the rear surface 16b, which is an opposite side of the surface side, have many in common. Hereinafter, as for the configurations common to both, the configurations on the surface side of the base body 14 will be mainly described, and descriptions of the configurations on the rear surface side of the base body 14 will be omitted. In differentiating both, a term "first" or "second" may be attached at a head of a common component, and a term "A" or "B" may be attached at an end of a sign. Hereinafter, a direction along a center line of the first recess 22A, extending from a bottom side of the first recess 22A toward an inlet side thereof, is assumed to be a height direction Z, and two directions perpendicular to the height direction Z are called a longitudinal direction X and a horizontal direction Y. The height direction Z corresponds to a thickness direction of the circuit board 16 and the directions X and Y are perpendicular to each other.

The sensor element 12 is a piezo-resistance type sensor. The sensor element 12 is mounted on the sensor mounting surface 16a of the circuit board 16 by bonding, for example. The sensor element 12 includes a hollow portion 12a, a filmy pressure sensitive portion 12b, a supporting portion 12c, and a pedestal portion 12d. The hollow portion 12a is recessed in a direction away from the sensor mounting surface 16a. The filmy pressure sensitive portion 12b is provided on the bottom section of the hollow portion 12a. The supporting portion 12c is provided more thickly than the pressure sensitive portion 12b in an outer peripheral section thereof. The pedestal portion 12d is joined to the supporting portion 12c. The pressure sensitive portion 12b and the supporting portion 12c are integrally formed by a semiconductor such as single crystal silicon. The pedestal portion 12d is configured, for example, by glass. On the circuit board 16, an introducing hole 26 for introducing a fluid into the hollow portion 12a of the sensor element 12 is formed on a rear side of the sensor element 12.

The pressure sensitive portion 12b has a sensor circuit including a bridge circuit (not illustrated), and the sensor circuit is electrically connected to a wiring pattern of the circuit board 16 (not illustrated) through a bonding wire such as a gold wire (not illustrated). The pressure sensitive portion 12b generates a detection signal in accordance with a displacement amount in the thickness direction (height direction Z), and outputs the detection signal from a sensor electrode to the wiring pattern of the circuit board 16.

On the circuit board 16, as illustrated in FIG. 2, a plurality of external connection electrodes 28 for electrically connecting to an external electronic device such as an electric control unit (ECU) is provided. The external connection electrodes 28 are through-hole electrodes. The external connection electrodes 28 include ground electrodes for connecting grounding connection terminals.

Referring back to FIG. 3, the first mold resin 20A partially coats the sensor mounting surface 16a so as to seal electronic components such as an IC chip and a capacitor to be mounted on the circuit board 16 (not illustrated) and at least a part of the wiring pattern. The first bottomed hole section 24A of the first mold resin 20A is provided so as to expose the sensor element 12 as well as a part of the sensor mounting surface 16a around a mounting position of the sensor element 12. The second mold resin 20B partially coats the rear surface 16b of the circuit board 16 so as to seal at least a part of the wiring pattern. The second bottomed hole section 24B of the second mold resin 20B is provided so as to expose the introducing hole 26 of the circuit board 16 as well as a part of the rear surface 16b of the circuit board 16 around the introducing hole 26.

The first bottomed hole section 24A has the first recess 22A with the sensor element 12 to be installed inside, and a first receiving surface section 30A extending outward from an opening edge of the first recess 22A. The first bottomed hole section 24A also has a first inner peripheral section 32A rising from an outer peripheral section of the first receiving surface section 30A, and a first edge surface section 34A extending outward from an opening edge on an inlet side of the first inner peripheral section 32A.

The sensor module 10 further includes a first diaphragm 36A to be provided facing the first receiving surface section 30A so as to close the first recess 22A from the inlet side (see also FIG. 2). The first diaphragm 36A is formed in a generally circular annular shape. The first diaphragm 36A is made from a metal, but may be made from resins, for example. An outer peripheral section of the first diaphragm 36A abuts the first receiving surface section 30A. The first diaphragm 36A is separably arranged on the base body 14, and fixed to the first mold resin 20A as the base body 14 by a first mounting member 44A which will be described later. The term "separably arranged" here means being arranged without being joined to the base body 14 by welding.

On the base body 14, a first pressure chamber 38A is formed by closing the first recess 22A by the first diaphragm 36A. The first pressure chamber 38A is formed by being surrounded by the sensor element 12, the first recess 22A, and the first diaphragm 36A.

The sensor module 10 also includes a first pressure transmission medium 40A to be filled in the first pressure chamber 38A. The first pressure transmission medium 40A is provided in order to transmit a pressure, which is transmitted from a surface side of the first diaphragm 36A, to the pressure sensitive portion 12b of the sensor element 12. The first pressure transmission medium 40A is, for example, silicone oil.

The sensor module 10 further includes a first elastic body 42A, outside the opening edge of the first recess 22A, to be arranged on the surface side of the first diaphragm 36A, which is one surface side thereof (see also FIG. 2). The first elastic body 42A is, for example, an 0-ring. The first elastic body 42A is arranged in the first inner peripheral section 32A of the first bottomed hole section 24A, and at a corner section formed between the first inner peripheral section 32A and the first receiving surface section 30A.

The sensor module 10 further includes the first mounting member 44A for fixing the first diaphragm 36A and the first elastic body 42A to the base body 14 (see also FIG. 2). The first mounting member 44A includes a cylindrical section 46, an annular positioning section 48, and a plurality of snap-fit sections 50. The cylindrical section 46 is inserted into the first inner peripheral section 32A from the inlet side thereof. The annular positioning section 48 extends outward from an opening edge on a base end side of the cylindrical section 46. The snap-fit sections 50 extend from a side edge section of the positioning section 48 in the height direction Z from the inlet side of the first recess 22A toward the bottom side thereof. Sections of the first mounting member 44A are integrally formed with a conductive metal as a material.

At an end of the cylindrical section 46, a taper portion 46a is formed, a diameter of which contracts toward the first receiving surface section 30A and the first diaphragm 36A opposite to the height direction Z. On the base end side of the cylindrical section 46, a flat external connection portion 46b is formed toward an axial direction (height direction Z). As described later, a first medium introducing member 56A for introducing a medium to be measured on the surface side of the first diaphragm 36A can be connected to the external connection portion 46b.

The first mounting member 44A is mounted on the base body 14 with the outer peripheral section of the first diaphragm 36A and the first elastic body 42A pressed toward the first receiving surface section 30A by the taper portion 46a of the cylindrical section 46. At this time, the cylindrical section 46 presses the first diaphragm 36A through the first elastic body 42A. The cylindrical section 46 crushes the first elastic body 42A by pressing the same toward the first receiving surface section 30A. The first diaphragm 36A is fixed to the base body 14 by being pressed to the first receiving surface section 30A by an elastic repulsive force of the first elastic body 42A.

When crushed by the taper portion 46a of the cylindrical section 46, the first elastic body 42A annularly adheres to the surface of the outer peripheral section of the first diaphragm 36A as well as annularly adheres to an inner peripheral surface of the first inner peripheral section 32A. Consequently, the first elastic body 42A seals between the cylindrical section 46 and the first diaphragm 36A as well as seals between the cylindrical section 46 and the first inner peripheral section 32A.

Upon mounting the first mounting member 44A, that is, upon inserting the cylindrical section 46 into the first inner peripheral section 32A of the first mold resin 20A, the positioning section 48 positions the first mounting member 44A relative to the base body 14 in the height direction Z by engaging with the first edge surface section 34A of the first mold resin 20A.

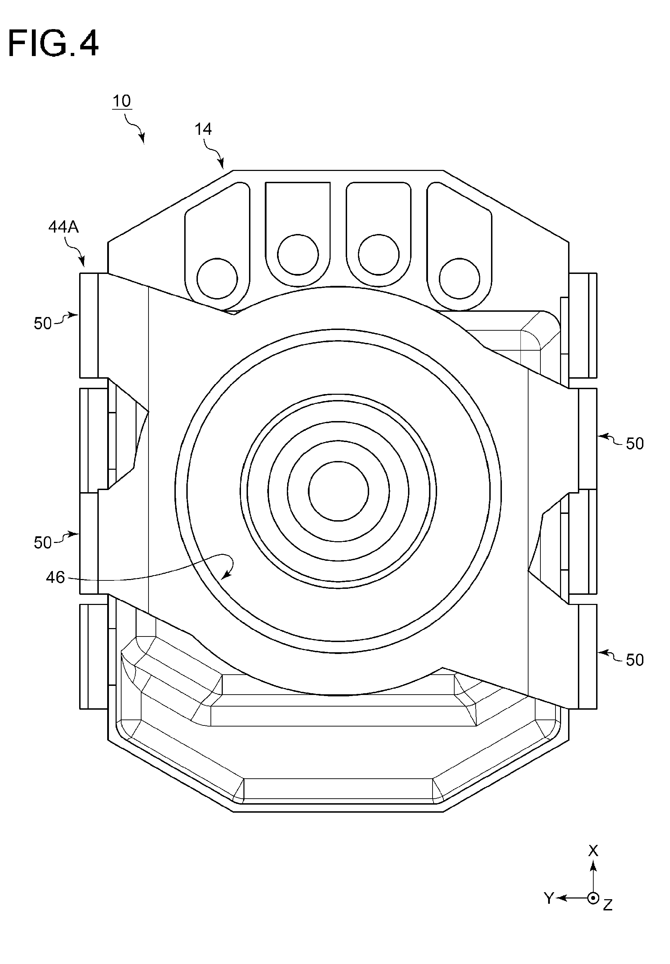

FIG. 4 is a top view of the sensor module 10. A plurality of snap-fit sections 50 of the first mounting member 44A includes two snap-fit sections 50 provided on one side of a horizontal direction Y (left-hand side in the drawing) and two snap-fit sections 50 provided on the other side of the horizontal direction Y (right-hand side in the drawing). When viewed from the height direction Z, the snap-fit sections 50 are provided outside the first recess 22A (not illustrated in the present drawing) and at positions across the cylindrical section 46 and the first recess 22A. The snap-fit sections 50 are provided in a zigzag manner so as to be arranged alternately on one side and the other side of the horizontal direction Y toward a longitudinal direction X.

Each snap-fit section 50 includes, as illustrated in FIGS. 2 and 3, an elastic arm section 52 and a claw portion 54. The elastic arm section 52 extends in the height direction Z from the positioning section 48 toward the bottom side of the first recess 22A from the inlet side thereof. The claw portion 54 is provided at an end of the elastic arm section 52. The elastic arm section 52 is formed into a sheet and elastically deformable in the horizontal direction Y. The claw portion 54 is provided to be folded back from the end of the elastic arm section 52 toward in a direction opposite to a direction, in which the elastic arm section 52 extends. The claw portion 54 is engaged with an edge section 16c of the circuit board 16 from the side of the rear surface 16b, which is opposite to the side of the sensor mounting surface 16a where the first recess 22A is provided, and a displacement in a direction away from the bottom side of the first recess 22A toward the inlet side thereof is restricted. As a result, the first mounting member 44A is mounted on the base body 14, with a position relative to the base body 14 maintained.

Next, a configuration on the rear surface side of the base body 14 will be described. The second bottomed hole section 24B of the second mold resin 20B includes the second recess 22B, a second receiving surface section 30B, a second inner peripheral section 32B, and a second edge surface section 34B. The second recess 22B is provided to be positioned on a rear side of the first recess 22A. The second recess 22B is communicated with the hollow portion 12a of the sensor element 12 through the introducing hole 26. The second receiving surface section 30B is provided at a position away from the first receiving surface section 30A in the thickness direction Z of the circuit board 16.

In the base body 14, a second pressure chamber 38B is formed by closing the second recess 22B by a second diaphragm 36B. The second pressure chamber 38B is formed by being surrounded by the hollow portion 12a of the sensor element 12, the introducing hole 26, the second recess 22B, and the second diaphragm 36B. The pressure sensitive portion 12b of the sensor element 12 is provided so as to separate the first pressure chamber 38A from the second pressure chamber 38B.

The sensor module 10 also includes a second pressure transmission medium 40B to be filled in the second pressure chamber 38B. The sensor module 10 further includes a second elastic body 42B and a second mounting member 44B which have configurations in common with the first elastic body 42A and the first mounting member 44A.

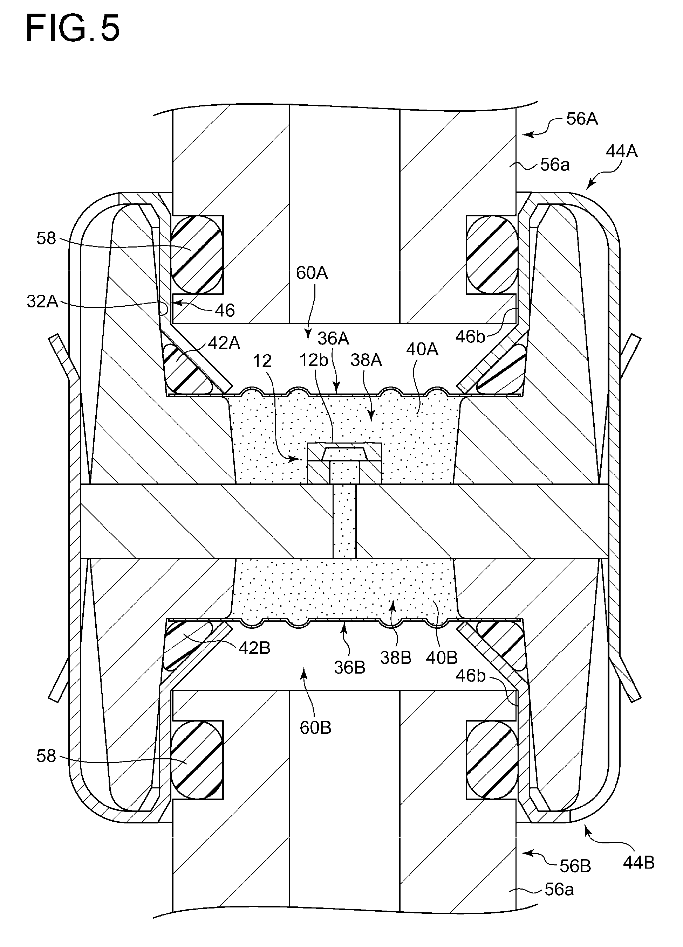

An exemplary usage state of the above sensor module 10 will be described with reference to FIG. 5.

The first medium introducing member 56A for introducing a first medium to be measured is connected to the external connection portion 46b of the first mounting member 44A, and a second medium introducing member 56B for introducing a second medium to be measured is connected to the external connection portion 46b of the second mounting member 44B. The medium introducing members 56A and 56B each include a cylindrical sensor connection section 56a to be inserted into the external connection portion 46b. A seal member 58 is attached to an outer peripheral section of the sensor connection section 56a. The seal member 58 elastically deforms between the sensor connection section 56a and the external connection portion 46b, and an elastic repulsive force thereof maintains a relative position between the sensor connection section 56a and the external connection portion 46b. At this time, the sensor connection section 56a and the external connection portion 46b are sealed by the seal member 58.

When the first medium introducing member 56A is connected to the external connection portion 46b of the first mounting member 44A, a first introducing chamber 60A is formed on the surface side of the first diaphragm 36A. When the second medium introducing member 56B is connected to the external connection portion 46b of the second mounting member 44B, a second introducing chamber 60B is formed on a surface side of the second diaphragm 36B. The first medium to be measured flows into the first introducing chamber 60A through the first medium introducing member 56A, and the second medium to be measured flows into the second introducing chamber 60B through the second medium introducing member 56B. For example, the first medium to be measured is a high-pressure fluid flowing upstream of a constriction section of a refrigerant passage, and the second medium to be measured is a low-pressure fluid flowing downstream of the constriction section thereof.

A pressure transmitted from the first medium to be measured in the first introducing chamber 60A pressure chamber 38A to the first diaphragm 36A is transmitted to a surface side of the pressure sensitive portion 12b of the sensor element 12 through the first pressure transmission medium 40A in the first pressure chamber 38A. A pressure transmitted from the second medium to be measured in the second introducing chamber 60B to the second diaphragm 36B is transmitted to a rear surface side of the pressure sensitive portion 12b of the sensor element 12 through the second pressure transmission medium 40B in the second pressure chamber 38B. Consequently, the pressure sensitive portion 12b of the sensor element 12 is displaced in the thickness direction according to a difference in pressure between the media to be measured, and generates a detection signal according to an amount of the displacement.

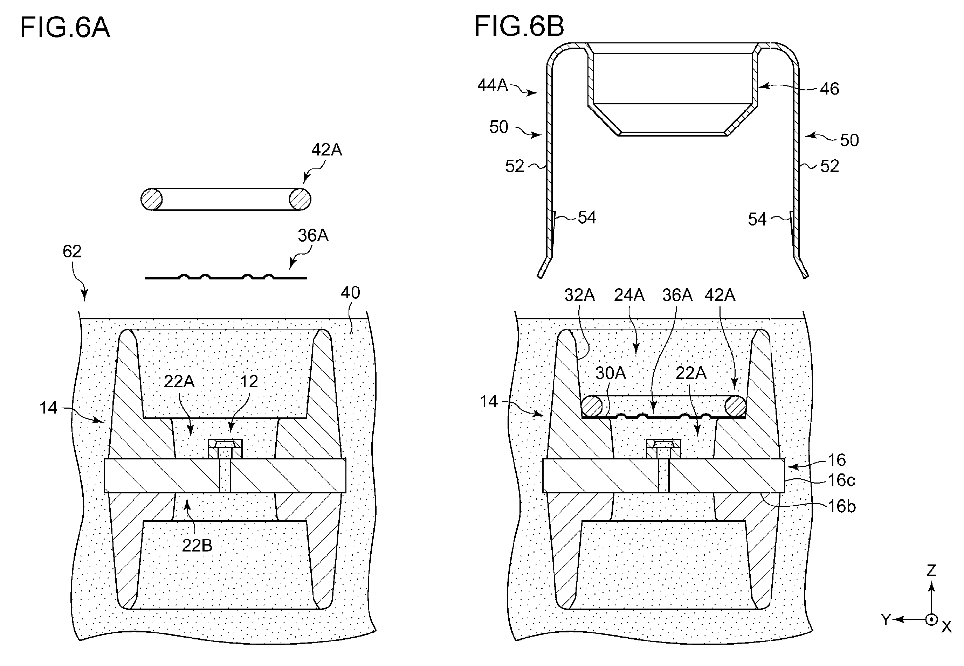

An exemplary method for manufacturing of the above sensor module 10 will be described with reference to FIG. 6.

First, the base body 14 with the sensor element 12 installed is prepared (S10). Then, as illustrated in FIG. 6(a), the base body 14 is arranged in a tank 62 that has stored the pressure transmission medium 40 (S12). At this time, in the tank 62, the first recess 22A and the second recess 22B are filled with the pressure transmission medium 40. As a result, the first recess 22A is filled with the pressure transmission medium 40 until a liquid level thereof reaches a position higher than the opening edge of the first recess 22A. In this condition, the first diaphragm 36A is arranged to close the first recess 22A from the inlet side (S14), and the first elastic body 42A is arranged on the surface side of the first diaphragm 36A (S16).

Then, as illustrated in FIG. 6(b), the cylindrical section 46 of the first mounting member 44A is inserted into the first inner peripheral section 32A of the first bottomed hole section 24A of the base body 14 from the inlet side, and the first mounting member 44A is mounted on the base body 14 with the first elastic body 42A and the first diaphragm 36A pressed to the first receiving surface section 30A (S18).

Upon mounting the first mounting member 44A, the first mounting member 44A is moved in the height direction Z from the inlet side of the first recess 22A toward the bottom side thereof. At this time, in each snap-fit section 50, the claw portion 54 contacts the edge section 16c of the circuit board 16 as the base body 14, and the elastic arm section 52 elastically deforms in the horizontal direction Y away from the first recess 22A. When the first mounting member 44A is further moved from this condition until the positioning section 48 engages with the first edge surface section 34A of the first mold resin 20A, the elastic arm section 52 is displaced by an elastic repulsive force in the horizontal direction Y toward the first recess 22A. An end of the claw portion 54 can be engaged with the edge section 16c of the circuit board 16 from a side of the rear surface 16b, and the first mounting member 44A is mounted on the base body 14. That is, the snap-fit sections 50 are arranged by a snap-fit method at a position engageable with the edge section 16c of the circuit board 16 as the base body 14.

Simultaneously or almost simultaneously with these S14 to S18, as illustrated in FIG. 3, the second diaphragm 36B facing the second receiving surface section 30B is arranged to close the second recess 22B from an inlet side (S20). The second elastic body 42B is arranged on a surface side of the second diaphragm 36B, which is one surface side thereof (S22). Then, the cylindrical section 46 of the second mounting member 44B is inserted into the second inner peripheral section 32B of the second bottomed hole section 24B from an inlet side, and the second mounting member 44B is mounted on the base body 14 with the second elastic body 42B and the second diaphragm 36B pressed to the second receiving surface section 30B (S24).

Effects of the above sensor module 10 will be described.

With the sensor module 10, the first diaphragm 36A can be fixed to the base body 14 by the first mounting member 44A without using welding. Therefore, in fixing the first diaphragm 36A, distortion of the first diaphragm 36A due to heat by welding can be prevented, and deterioration in detection accuracy attributable to the distortion can be prevented.

In Patent Literature 2 described above, in fixing a diaphragm to a base body, a part of the base body is swaged near the diaphragm, and the diaphragm can be unintentionally distorted by swaging. In this respect, with the above sensor module 10, the first diaphragm 36A can be fixed to the base body 14 by the first mounting member 44A without swaging the base body 14. As a result, distortion of the first diaphragm 36A by swaging the base body 14 can be prevented, and deterioration in detection accuracy attributable to the distortion can be prevented.

The first elastic body 42A annularly adheres to the first diaphragm 36A as well as annularly adheres to the first inner peripheral section 32A. Thus, as illustrated in FIG. 5, fluid leakage from the first pressure chamber 38A toward an external space passing through between the cylindrical section 46 and the first inner peripheral section 32A can be restricted, while restricting fluid leakage from the first pressure chamber 38A toward the first introducing chamber 60A passing through between the cylindrical section 46 and the first diaphragm 36A. The first elastic body 42A also annularly adheres to the end of the cylindrical section 46. Therefore, fluid leakage from the first introducing chamber 60A toward the external space passing through between the cylindrical section 46 and the first inner peripheral section 32A can also be restricted. Consequently, sealing performance of the first pressure chamber 38A and the first introducing chamber 60A becomes easy to ensure by the first elastic body 42A, while fixing the first diaphragm 36A to the base body 14 by using the elastic repulsive force of the first elastic body 42A. In achieving such a function, a single first elastic body 42A is used as a seal member, and the number of seal members required for achieving this function can be restrained.

The taper portion 46a is formed at the end of the cylindrical section 46 of the first mounting member 44A. Therefore, by inserting the cylindrical section 46 into the first inner peripheral section 32A of the base body 14, the first elastic body 42A can be easily made adhere to the outer peripheral section of the first diaphragm 36A as well as the first inner peripheral section 32A. As a result, the cylindrical section 46, and the first diaphragm 36A, and the first inner peripheral section 32A can be easily sealed.

The first mounting member 44A has a plurality of snap-fit sections 50. Therefore, welding, swaging, and the like are not required in mounting the first mounting member 44A on the base body 14. Thus, special facilities such as a welding facility and a press facility for swaging are not required, and the first mounting member 44A can be easily mounted on the base body 14.

The above-described Patent Literature 3 discloses a method for inserting a filling pipe into a base body in order to fill a pressure transmission medium in a pressure chamber, and crushing a part of the filling pipe after filling the pressure transmission medium from the filling pipe. With this sort of method, normally, work is performed in a vacuum in order to suppress remaining of air bubbles in a pressure chamber at the time of filling a pressure transmission medium in the pressure chamber.

In contrast, with the method for manufacturing the sensor module 10 described above, the first diaphragm 36A is arranged to close the first recess 22A after the pressure transmission medium 40 is filled in the first recess 22A. Therefore, without working in a vacuum, remaining of air bubbles in the first pressure chamber 38A can be easily suppressed. Furthermore, in filling in this way, it is not required to install a filling pipe in the base body 14 or crush the filling pipe, and workability in that work becomes favorable.

A case will be considered, where the first diaphragm 36A is arranged to close the first recess 22A from the inlet side after the first elastic body 42A is brought into contact with the first receiving surface section 30A, and then the first mounting member 44A is mounted. In this case, when the first mounting member 44A is mounted, an internal pressure of the first pressure chamber 38 changes by deformation of the first elastic body 42A and movement of the first diaphragm 36A.

In this respect, with a manufacturing method according to the present embodiment, after the first diaphragm 36A is arranged to close the first recess 22A from the inlet side, the first elastic body 42A is arranged and then the first mounting member 44A is mounted. As a result, there is an additional advantage that when the first mounting member 44A is mounted, the first diaphragm 36A does not move, and changes in internal pressure of the first pressure chamber 38 can be prevented.

The above effects are achieved similarly with a configuration where the second diaphragm 36B, the second elastic body 42B, the second mounting member 44B, and the like are mounted on the rear surface side of the base body 14.

Next, other features of the sensor module 10 will be described.

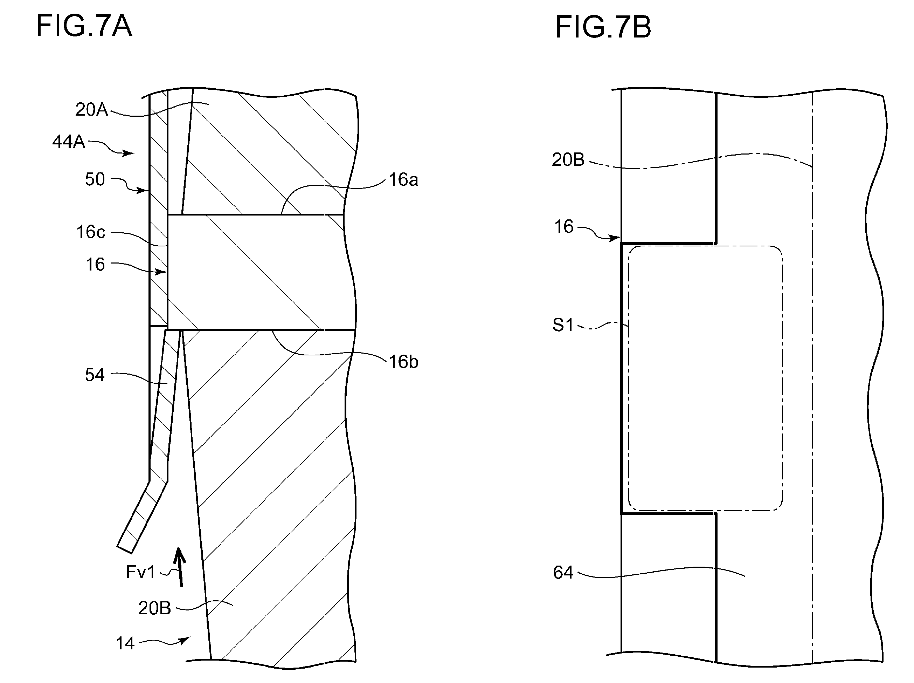

FIG. 7(a) is a partially enlarged view of the base body 14 and the first mounting member 44A of FIG. 3. FIG. 7(b) is a diagram viewed from a direction Fv1 of FIG. 7(a). In FIG. 7(b), a position of an outer edge of the second mold resin 20B is indicated with a two-dot chain line, and a position where the claw portion 54 of the snap-fit section 50 contacts the circuit board 16 is indicated with a one-dot chain line S1.

At the edge section 16c of the circuit board 16, a ground pattern 64 which becomes a part of a wiring pattern of the circuit board 16 is formed on both sides of the sensor mounting surface 16a and the rear surface 16b. The ground pattern 64 is electrically connected to the ground electrodes described above, and becomes a potential at a ground level. The ground pattern 64 is, in an example illustrated in the drawing, provided as a plane solid pattern. The ends of the claw portions 54 of the snap-fit sections 50 of the first mounting member 44A contact the ground pattern 64. A part of the snap-fit sections 50 serves as a discharge section arranged at a dischargeable position on the ground pattern 64 of the circuit board 16.

Of the first mounting member 44A, as illustrated in FIG. 3, a part of the first positioning section 48 arranged near an opening edge of the first bottomed hole section 24A, and the cylindrical section 46 inserted into the first bottomed hole section 24A serve as a protection section for protecting the first diaphragm 36A from static electricity. When the static electricity is about to be conducted from an inlet side of the first bottomed hole section 24A toward the first diaphragm 36A on a bottom side thereof, the static electricity is collected by the protection section and discharged to the ground pattern 64 from a first snap-fit section 50 as a discharge section. Even in a case where the static electricity is conducted to the first diaphragm 36A, the static electricity is discharged from the first diaphragm 36A to the ground pattern 64 through the first mounting member 44A when a distance from the first diaphragm 36A to the cylindrical section 46 of the first mounting member 44A is shorter than a distance L1 from the pressure sensitive portion 12b of the sensor element 12 to the first diaphragm 36A.

This makes it difficult to conduct the static electricity from the first diaphragm 36A to the sensor element 12 through the first pressure transmission medium 40A, and makes it easy to protect the sensor element 12 from effects of the static electricity. The circuit board 16 is partially coated with the first mounting member 44A that becomes a potential at a ground level. Consequently, it becomes easy to suppress transmission of an electrical noise due to a radio wave, a magnetic field, and the like from outside to the sensor element 12 and the circuit board 16, and emission from, for example, the sensor element 12 to outside. The above effects are similarly achieved with the second mounting member 44B and the second diaphragm 36B.

The first pressure chamber 38A and the second pressure chamber 38B described above are constituted to be equivalent in capacity. As a result, the first pressure transmission medium 40A and the second pressure transmission medium 40B to be filled in these pressure chambers are equivalent in filling quantity (volume). The term "equivalent" here includes a case where both are completely the same and a case where both are substantially the same.

Consequently, in a case where the pressure transmission media 40A and 40B are expanded with heat due to changes in temperature, amounts of pressure variation of the pressure transmission media 40A and 40B become easy to suppress to the same extent, and changes in forces applied from the pressure transmission media 40A and 40B to the pressure sensitive portion 12b of the sensor element 12 become easy to offset. As a result, even when the pressure transmission media 40A and 40B are expanded with heat due to changes in temperature, effects on the sensor elements 12 become easy to suppress, and deterioration in detection accuracy of the sensor element 12 becomes easy to suppress.

The first diaphragm 36A has, on the rear surface thereof, a first pressure receiving surface 66A contacting the first pressure transmission medium 40A. A pressure applied to the first diaphragm 36A from the first medium to be measured on the surface side of the first diaphragm 36A is transmitted to the first pressure transmission medium 40A through the first pressure receiving surface 66A. The second diaphragm 36B has, on the rear surface thereof, a second pressure receiving surface 66B contacting the second pressure transmission medium 40B. A pressure applied to the second diaphragm 36B from the second medium to be measured on the surface side of the second diaphragm 36B is transmitted to the second pressure transmission medium 40B through the second pressure receiving surface 66B. These first pressure receiving surface 66A and second pressure receiving surface 66B are constituted to be equivalent in area. The term "area" here means an area when the pressure receiving surfaces 66A and 66B are projected in the thickness direction on a virtual surface perpendicular to the thickness direction (direction Z) of the diaphragms 36A and 36B. The term "equivalent" here includes a case where both are completely the same and a case where both are substantially the same.

Consequently, in a case where the pressure transmission media 40A and 40B are expanded with heat due to changes in temperature, it becomes easy to suppress to the same extent amounts of deformation of the diaphragms 36A and 36B attributable to changes in pressure of the pressure transmission media 40A and 40B. As a result, even when the diaphragms 36A and 36B deform, a way that a pressure is transmitted from the media to be measured to the diaphragms 36A and 36B becomes difficult to change. Therefore, even when the pressure transmission media 40A and 40B are expanded with heat due to changes in temperature, the effects on the sensor element 12 become easier to suppress, and the deterioration in detection accuracy of the sensor element 12 becomes easier to suppress.

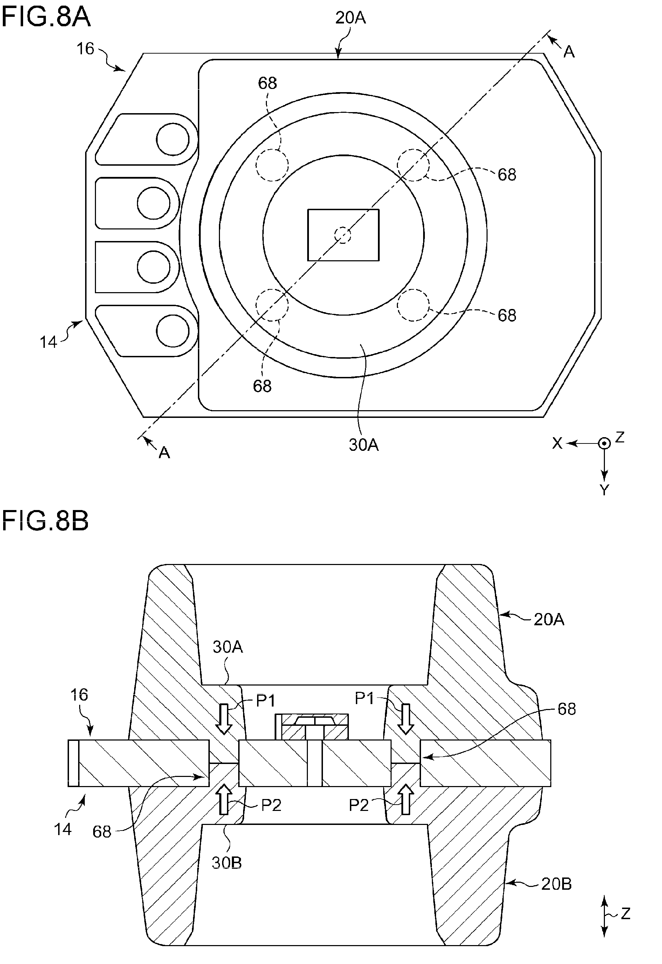

FIG. 8(a) is a top view of the base body 14, and FIG. 8(b) is a sectional view of an A-A line of FIG. 8(a).

The base body 14 includes, in addition to the circuit board 16, the first mold resin 20A, and the second mold resin 20B, a plurality of load transmission bodies 68 to be provided through the circuit board 16 so as to connect the first mold resin 20A and the second mold resin 20B. The load transmission bodies 68 are provided as a part of both the first mold resin 20A and the second mold resin 20B. The load transmission bodies 68 are provided at positions away from the first receiving surface section 30A and the second receiving surface section 30B in the thickness direction Z of the circuit board 16 and at intervals of equal angle in a circumferential direction of the first recess 22A and the second recess 22B. The load transmission bodies 68 are provided in order to transmit a load, which is to be transmitted from the first diaphragm 36A to the first mold resin 20A through the first receiving surface section 30A, to the second mold resin 20B. From another perspective, it can be argued that the load transmission bodies 68 are provided in order to transmit a load, which is to be transmitted from the second diaphragm 36B to the second mold resin 20B through the second receiving surface section 30B, to the first mold resin 20A.

Due to the elastic repulsive force of the first elastic body 42A and a pressure received from the first medium to be measured, a load is easy to apply to the first mold resin 20A in a direction P1 from the first diaphragm 36A toward the circuit board 16. Due to the elastic repulsive force of the second elastic body 42B and a pressure received from the second medium to be measured, a load is easy to apply to the second mold resin 20B in a direction P2 from the second diaphragm 36B toward the circuit board 16. A combination of these can easily apply a load to the circuit board 16 from both sides in the thickness direction Z and adversely affect durability.

In this respect, according to the present embodiment, a load applied to the first mold resin 20A from the first diaphragm 36A and a load applied to the second mold resin 20B from the second diaphragm 36B can be released to other mold resins 20A and 20B through the load transmission bodies 68, or can easily offset each other. A load applied to the circuit board 16 becomes easy to suppress.

The load transmission bodies 68 are at positions away from the first receiving surface section 30A and the second receiving surface section 30B in the thickness direction of the circuit board 16. Therefore, a load applied to the first receiving surface section 30A from the first diaphragm 36A and a load applied to the second mold resin 20B from the second diaphragm 36B become easy to release effectively to other mold resins 20A and 20B through the load transmission bodies 68, and a load applied to the circuit board 16 becomes easy to suppress effectively.

The load transmission bodies 68 are provided as a part of both the first mold resin 20A and the second mold resin 20B. Therefore, the load transmission bodies 68 can be easily formed by pouring a molten resin in a mold in a process of molding a mold resin.

### [Second Embodiment]

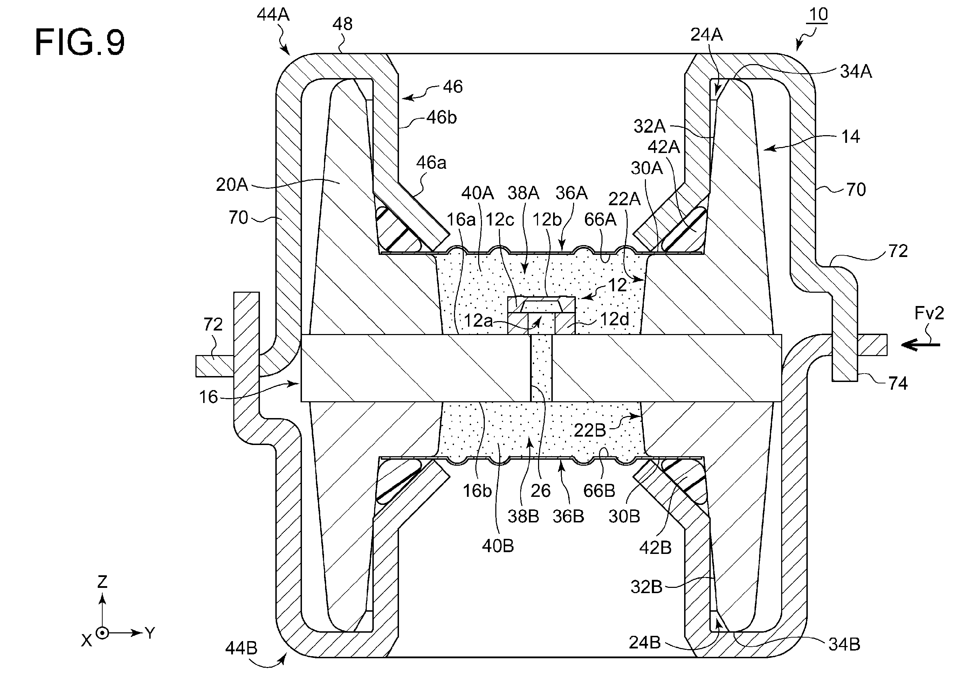

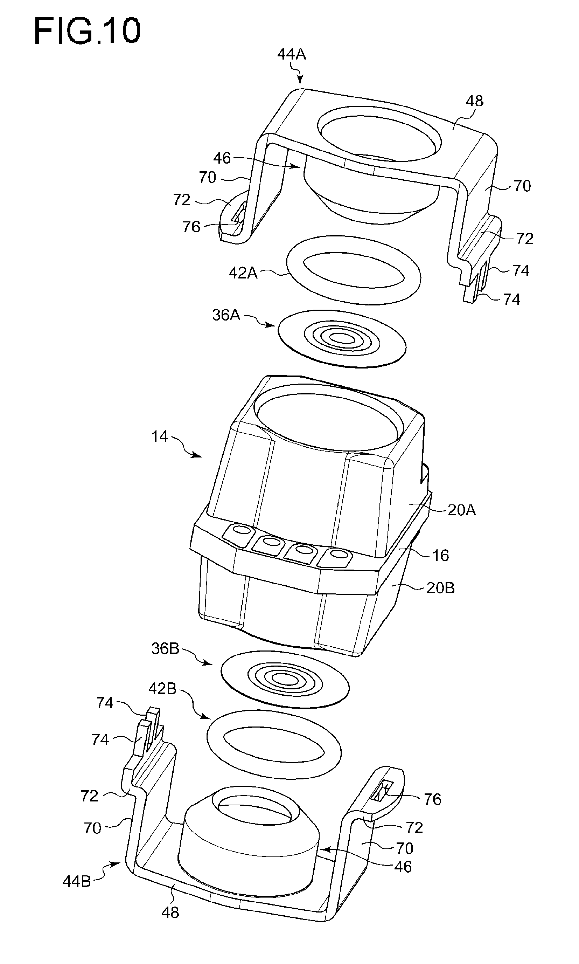

FIG. 9 is a sectional side view of a sensor module 10 according to a second embodiment. FIG. 10 is an exploded perspective view of the sensor module 10. In the present embodiment, a first mounting member 44A and a second mounting member 44B have configurations different from the first embodiment.

The first mounting member 44A further has, in addition to a cylindrical section 46 and a positioning section 48, a pair of arm sections 70 and extension sections 72. The arm sections 70 extend, from side edge sections on both sides of the positioning section 48 in a horizontal direction Y, in a height direction Z from an inlet side of a first recess 22A toward a bottom side thereof. The extension sections 72 extend outward from an each end of the pair of arm sections 70 in the horizontal direction Y. The extension sections 72 to be provided to the pair of arm sections 70 are each provided at positions deviating in the height direction Z.

The extension section 72 on one side of the horizontal direction Y (right-hand side in FIG. 10) is provided with a plurality of projected for-swaging sections 74 extending in the height direction from the inlet side of the first recess 22A toward the bottom side thereof. In the extension section 72 on the other side of the horizontal direction Y (left-hand side in FIG. 10), an insertion hole 76, through which a plurality of for-swaging sections 74 of the second mounting member 44B is inserted, is formed. As with the first mounting member 44A, the second mounting member 44B includes a pair of arm sections 70, extension sections 72, and the like.

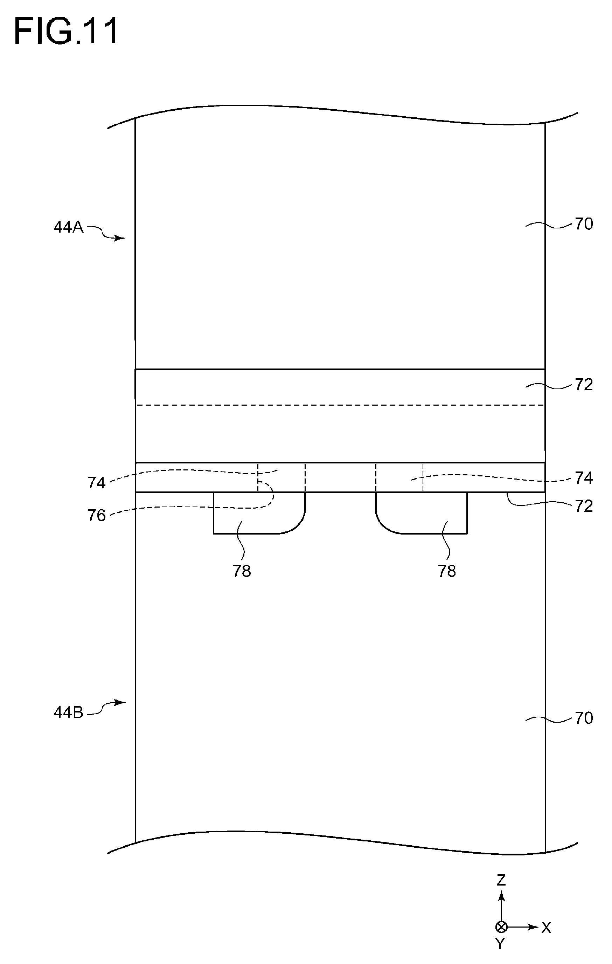

FIG. 11 is a diagram viewed from a direction Fv2 of FIG. 9.

The plurality of for-swaging sections 74 of the first mounting member 44A is inserted through the insertion hole 76 of the second mounting member 44B. Swaging portions 78 are provided at ends of the for-swaging sections 74 of the first mounting member 44A. The swaging portions 78 are formed by swaging the ends of the plurality of for-swaging sections 74 to be bent to opposite sides in a longitudinal direction X. The swaging portions 78 of the first mounting member 44A are restricted in displacement in a direction away from the bottom side of the first recess 22A toward the inlet side thereof (height direction Z) by engaging with the extension section 72 of the second mounting member 44B. As a result, the first mounting member 44A is mounted on a base body 14, with a position relative to the base body 14 maintained. The same applies to the for-swaging sections 74 of the second mounting member 44B.

Even with the above sensor module 10, as with the first embodiment, welding and swaging of the base body 14 are not required in fixing a first diaphragm 36A to the base body 14. As a result, distortion of the first diaphragm 36A can be prevented and deterioration in detection accuracy attributable to the distortion can be prevented. The first mounting member 44A has a position thereof relative to the base body 14 firmly maintained and a degree of fixation thereof to the base body 14 increased by the swaging portions 78.

Preferred embodiments of the present invention have been described above, but the present invention is not limited to the specific embodiments, and it is needless to say that various types of changes can be made without departing from the technical idea of the present invention. Modifications of the present invention will be described below.

A sensor module 10 has been described in an example of being used for a vehicle air conditioner, but uses thereof are not limited to this. A sensor module 10 has been described in another example of being used as a differential pressure sensor that detects a pressure difference between media to be measured flowing in two fluid passages. In addition, a sensor module 10 may be used as a gauge pressure sensor that detects a pressure of a medium to be measured based on an atmospheric pressure. In this case, either a first pressure chamber 38A or a second pressure chamber 38B may be opened to the atmospheric pressure, and a pressure from the medium to be measured may be transmitted to a pressure sensitive portion 12b of a sensor element 12 through a pressure measurement medium to be filled in the other. A sensor module 10 may also be used as an absolute pressure sensor that detects a pressure of a medium to be measured based on an absolute vacuum. In this case, an inside of a hollow portion 12a of a sensor element 12 may be maintained as a vacuum without forming an introducing hole 26 of a circuit board 16. Beside this, either a first pressure chamber 38A or a second pressure chamber 38B may be maintained as a vacuum.

A base body 14 has been described in an example of including a circuit board 16 and mold resins 20A and 20B, but is not limited to this. A base body 14 may be, for example, a housing made from metals, resins, and the like. In a case where a base body 14 includes a circuit board 16 and mold resins 20A and 20B, only the first mold resin 20A may be included without the second mold resin 20B.

A sensor element 12 has been described in terms of a piezo-resistance type sensor, but may be others such as a capacitance type sensor and a silicon resonant sensor.

A first elastic body 42A has been described in an example of being arranged on a surface side of a first diaphragm 36A, but may be arranged on a rear surface side thereof. In this case, an annular groove portion for housing the first elastic body 42A may be provided in a first receiving surface section 30A of a base body 14. In either case, it is only necessary that the first elastic body 42A be arranged on one surface side of the first diaphragm 36A.

A first bottomed hole section 24A may not have a first inner peripheral section 32A, as long as the same has at least a first recess 22A and a first receiving surface section 30A. In this case, a first mounting member 44A may not have a cylindrical section 46. In a case where a first mounting member 44A has a cylindrical section 46, a taper portion 46a may not be provided.

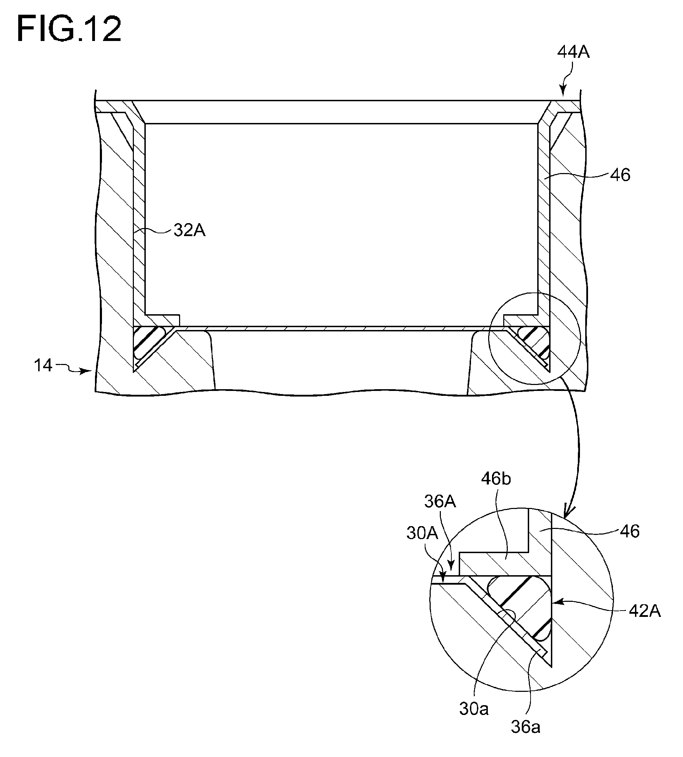

FIG. 12 is a sectional side view of a part of the sensor module 10 according to the first modification. In an example of FIG. 3, the taper portion 46a has been provided in the first mounting member 44A. Instead of this, as illustrated in FIG. 12, taper portions 30a and 36a may be provided in an outer peripheral section of the first receiving surface section 30A and an outer peripheral section of the first diaphragm 36A. These taper portions 30a and 36a are contracted in diameter toward the cylindrical section 46 of the first mounting member 44A. At an end of the cylindrical section 46, an annular portion 46b is provided to extend toward inside in a radial direction.

In this case as well, the first elastic body 42a is crushed between the annular portion 46b at the end of the cylindrical section 46 and the taper portions 30a and 36a, annularly adheres to a surface of the outer peripheral section of the first diaphragm 36A, as well as annularly adheres to an inner peripheral surface of the first inner peripheral section 32A. As a result, by inserting the cylindrical section 46 into the first inner peripheral section 32A of the base body 14, the cylindrical section 46, the first diaphragm 36A, and the first inner peripheral section 32A can be easily sealed. In achieving such an effect, it is only necessary that in either the end of the cylindrical section 46 of the first mounting member 44A, or the first receiving surface section 30A and the first diaphragm 36A, the taper portions contracted in diameter toward the other be formed.

In providing the taper portion 36a on the first diaphragm 36A, in a case where a hard material such as a metal is used as the first diaphragm 36A, it is only necessary that the taper portion 36a be formed in advance by, for example, forming on the first diaphragm 36A. In a case where a soft material such as a polyimide film is used as the first diaphragm 36A, the taper portion 36a may not be formed in advance on the first diaphragm 36A. In this case, when the first diaphragm 36A is brought into contact with the first receiving surface section 30A with the taper portion 30a provided, it is only necessary that the taper portion 36a be provided on the first diaphragm 36A by deforming the first diaphragm 36A by, for example, its own weight along the taper portion 30a of the first receiving surface section 30A.

It is only necessary that snap-fit sections 50 of the first mounting member 44A be able to maintain a position of the first mounting member 44A by engaging with another member. For example, the position may be maintained by engaging with a second mounting member 44B, instead of the base body 14.

It is only necessary that a swaging portion 78 of the first mounting member 44A be able to maintain the position of the first mounting member 44A by engaging with another member. For example, the position may be maintained by engaging with the base body 14 instead of the second mounting member 44B.

The snap-fit sections 50 serving as discharge sections of the first mounting member 44A have been described in an example of contacting the ground pattern 64 of the circuit board 16. The discharge sections are not limited to the snap-fit sections 50, and may be other sections. The discharge sections may be arranged close to, and not in contact with, the ground pattern 64, as long as a part of the discharge sections is arranged at a dischargeable position on the ground pattern 64 of the circuit board 16. The term "close to" here means that the discharge sections are arranged such that a distance from the ground pattern 64 to the discharge sections is equal to or shorter than the distance L1 from the pressure sensitive portion 12b of the sensor element 12 to the first diaphragm 36A (see FIG. 3). Consequently, static electricity becomes hard to conduct from the first mounting member 44A and the first diaphragm 36A to the sensor element 12, while the static electricity becomes easy to conduct from the first mounting member 44A to the ground pattern 64, and the sensor element 12 becomes easy to protect from effects of the static electricity.

In addition, the first mounting member 44A requires conductivity in discharging to the ground pattern 64 of the circuit board 16. Therefore, the first mounting member 44A according to the embodiments has been described in an example of being made from a metals, but in addition to this, a conductive resin, for example, may be used as a material.

A first pressure chamber 38A and a second pressure chamber 38B may be constituted not to be equivalent in capacity, and may be constituted to substantially different in capacity. A first pressure receiving surface 66A and a second pressure receiving surface 66B may be constituted not to be equivalent in area, and may be constituted to substantially different in area.

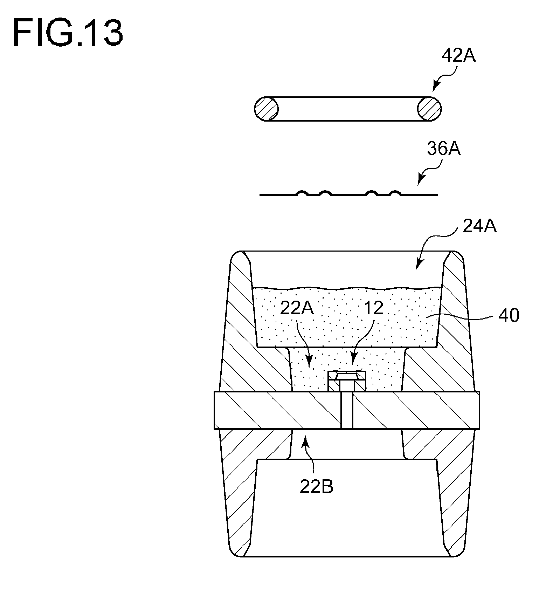

FIG. 13 is a sectional side view of a method for manufacturing a sensor module 10 according to a second modification.

In an example of FIG. 6, the base body 14 is arranged in the tank 62 with the pressure transmission medium 40 stored, but in the present example, this process is not executed. In the present example, a base body 14 with a sensor element 12 installed is prepared (S10). After this, as illustrated in FIG. 13, a pressure transmission medium 40 is injected into a first bottomed hole section 24A including a first recess 22A (S12). At this time, the first recess 22A is filled with the pressure transmission medium 40. This pressure transmission medium 40 is injected until a liquid level thereof reaches a position higher than an opening edge of the first recess 22A. In this condition, a first diaphragm 36A is arranged in the first bottomed hole section 24A so as to close the first recess 22A from an inlet side (S14). At this time, in order to prevent air from gathering on a rear surface side of the first diaphragm 36A, the first diaphragm 36A may be arranged in the pressure transmission medium 40 with a thickness direction of the first diaphragm 36A slanted off a horizontal plane. Then, a first elastic body 42A is arranged on a surface side of the first diaphragm 36A (S16), and a first mounting member 44A is mounted on the base body 14. As for a configuration of a rear surface side of the base body 14 such as a second bottomed hole section 24B, it is only necessary that processes similar to S10 to S16 described above be executed after turning the base body 14 upside down.

Even with this method, the first diaphragm 36A is arranged to close the first recess 22A after the pressure transmission medium 40 is filled in the first recess 22A. Therefore, without working in a vacuum, remaining of air bubbles in a first pressure chamber 38A can be easily suppressed.

It can be argued that the sensor module 10 according to the embodiments and modifications described above includes inventions described in the following item. (Item)

A pressure sensor module including a base body that has a first recess with a pressure sensor element to be installed inside and a first receiving surface section extending outward from an opening edge of the first recess, and a first diaphragm that is provided facing the first receiving surface section so as to close the first recess from an inlet side and fixed to the base body, wherein the base body has a circuit board, on which the pressure sensor element is mounted, a first mold resin that coats a sensor mounting surface of the circuit board, a rear surface side member that is provided on a rear surface side of the circuit board, which is an opposite side of the sensor mounting surface, and a load transmission body that is provided through the circuit board so as to connect the first mold resin and the rear surface side member.

In a sensor module using a diaphragm, a load is easy to apply to a mold resin in a direction from the diaphragm to a circuit board due to, for example, a pressure from a medium to be measured. As a result, a load is easy to apply to the circuit board in a thickness direction, and durability can be adversely affected.

An invention specified by this item has been made in view of the above, and an object thereof is to provide a pressure sensor module that can easily suppress a load applied to a circuit board in a case where a diaphragm is used.

In an invention specified by this item, diaphragms 36A and 36B may be fixed to a base body 14 by welding, swaging of the base body 14, and the like in addition to cases where mounting members 44A and 44B are used.

A load transmission body 68 has been described in an example of connecting the first mold resin 20A and the second mold resin 20B as a rear surface side member to be provided on a circuit board 16. This rear surface side member is not limited to a mold resin, as long as the same is a member different from the circuit board 16 or the first mold resin 20A. The load transmission body 68 may not be a part of the mold resin, and may be a pin, for example, to be provided through the circuit board 16. In a case where the load transmission body 68 is a part of the mold resin, the load transmission body 68 may be, as described above, a part of the first mold resin 20A and/or the second mold resin 20B.
- 10: Sensor module
- 12: Pressure sensor element
- 14: Base body
- 16: Circuit board
- 16a: Sensor mounting surface
- 16b: Rear surface
- 20A: First mold resin
- 20B: Second mold resin
- 22A: First recess
- 22B: Second recess
- 30A: First receiving surface section
- 30B: Second receiving surface section
- 32A: First inner peripheral section
- 36A: First diaphragm
- 36B: Second diaphragm
- 38A: First pressure chamber
- 38B: Second pressure chamber
- 40A: First pressure transmission medium
- 40B: Second pressure transmission medium
- 42A: First elastic body
- 44A: First mounting member
- 46: Cylindrical section
- 46a: Taper portion
- 46b: External connection portion
- 50: Snap-fit section
- 56A: First medium introducing member
- 62: Tank
- 64: Ground pattern
- 66A: First pressure receiving surface
- 66B: Second pressure receiving surface
- 68: Load transmission body
- 78: Swaging portion

## Claims

1. A pressure sensor module (10) comprising:
a base body (14) that has a first recess (22A) with a pressure sensor element (12) to be installed inside, and a first receiving surface section (30A) extending outward from an opening edge of the first recess (22A);
a first diaphragm (36A) that is provided facing the first receiving surface section (30A) so as to close the first recess (22A) from an inlet side and arranged separably from the base body (14);
a first elastic body (42A) that is arranged on one surface side of the first diaphragm (36A) outside the opening edge of the first recess (22A); and
a first mounting member (44A) that is mounted on the base body (14) with the first diaphragm (36A) and the first elastic body (42A) pressed toward the first receiving surface section (30A).

2. The pressure sensor module (10) according to claim 1, wherein
the base body (14) further has a first inner peripheral section (32A) rising from an outer peripheral section of the first receiving surface section (30A),
the first elastic body (42A) is arranged on a surface side of the first diaphragm (36A) outside the opening edge of the first recess (22A),
the first mounting member (44A) has a cylindrical section (46) that is inserted from an inlet side of the first inner peripheral section (32A) and presses the first diaphragm (36A) and the first elastic body (42A) toward the first receiving surface section (30A), and
the first elastic body (42A) annularly adheres to the first diaphragm (36A) as well as annularly adheres to the first inner peripheral section (32A) by being crushed by the cylindrical section (46).

3. The pressure sensor module (10) according to claim 2, wherein an external connection portion (46b) that is capable of connecting a first medium introducing member (56A) for introducing a medium to be measured on the surface side of the first diaphragm (36A) is formed in the cylindrical section (46).

4. The pressure sensor module (10) according to claim 2 or 3, wherein a taper portion (46a) is formed in either an end of the cylindrical section (46), or the first receiving surface section (30A) and the first diaphragm (36A), the taper portion (46a) contracted in a diameter toward the other, and
the first elastic body (42A) is crushed between the other and the taper portions (46a).

5. The pressure sensor module (10) according to any of claims 1 to 4, wherein the first mounting member (44A) has snap-fit sections (50) that maintain positions relative to the base body (14) by engaging with another member.

6. The pressure sensor module (10) according to any of claims 1 to 4, wherein the first mounting member (44A) has swaging portions (78) that maintain positions relative to the base body (14) by engaging with another member.

7. The pressure sensor module (10) according to any of claims 1 to 6, wherein
the base body (14) has a circuit board (16), on which the pressure sensor element (16a) is mounted, and
the first mounting member (44A) has conductivity, and is partially arranged at a dischargeable position on a ground pattern (64) of the circuit board (16).

8. The pressure sensor module (10) according to any of claims 1 to 7, wherein
the base body (14) further has a second recess (22B) to be provided on a rear surface side that is opposite of a surface side, on which the first recess (22A) is provided,
the pressure sensor module further (10) comprises:
a first pressure transmission medium (40A) that is filled in a first pressure chamber (38A) to be formed by closing the first recess (22A) by the first diaphragm (36A);
a second diaphragm (36B) that closes the second recess (22B) from an inlet side; and
a second pressure transmission medium (40B) that is filed in a second pressure chamber (38B) to be formed by closing the second recess (22B) by the second diaphragm (36B), and
the first pressure chamber (38A) and the second pressure chamber (38B) are constituted to be equivalent in capacity.

9. The pressure sensor module (10) according to claim 8, wherein
the first diaphragm (36A) has a first pressure receiving surface (66A) that contacts the first pressure transmission medium (40A),
the second diaphragm (36B) has a second pressure receiving surface (66B) that contacts the second pressure transmission medium (40B), and
the first pressure receiving surface (66A) and the second pressure receiving surface (66B) are constituted to be equivalent in area.

10. The pressure sensor module (10) according to any of claims 1 to 9, wherein
the base body (14) has:
the circuit board (16), on which the pressure sensor element (12) is mounted;
a first mold resin (20A) that coats a sensor mounting surface (16a) of the circuit board (16);
a rear surface side member (20B) that is provided on a rear surface (16b) side of the circuit board (16), which is an opposite side of the sensor mounting surface (16a); and
a load transmission body (68) that is provided through the circuit board (16) so as to connect the first mold resin (20A) and the rear surface side member (20B).

11. The pressure sensor module (10) according to claim 10, wherein the load transmission body (68) is provided at a position away from the first receiving surface section (30A) in a thickness direction of the circuit board (16).

12. The pressure sensor module (10) according to claim 10 or 11, wherein
the rear surface side member (20B) is a second mold resin (20B) that coats the rear surface (16b) of the circuit board (16), and
the load transmission body (68) is a part of the first mold resin (20A) and/or the second mold resin (20B).

13. A method for manufacturing the pressure sensor module (10) according to any of claims 1 to 12, the method comprising:
preparing the base body (14) with the pressure sensor element (12) installed;
arranging the first diaphragm (36A) facing the first receiving surface section (30A) so as to close the first recess (22A) from the inlet side with the first recess (22A) filled with the pressure transmission medium (40A);
arranging the first elastic body (42A) on one surface side of the first diaphragm (36A); and
mounting the first mounting member (44A) on the base body (14) with the first elastic body (42A) and the first diaphragm (36A) pressed toward the first receiving surface section(30A).
